# EUROPEAN PATENT SPECIFICATION

(11) **EP 2 360 754 B1**
(45) Date of publication and mention of the grant of the patent: **13.11.2013**
(21) Application number: 10250898.3
(22) Date of filing: 07.05.2010
(51) Int. Cl.: H01M 2/04, H01M 2/20, H01M 2/34

(54) **Battery assembly**
Batterieanordnung
Ensemble de batterie

(30) Priority: 26.01.2010 US 298267 P
(43) Date of publication of application: 24.08.2011
(73) Proprietor: Samsung SDI Co., Ltd., Gyeonggi-do (KR)
(72) Inventor: Baek, Woon-Seong, Suwon-si, Gyeonggi-do (KR)
(74) Representative: Mounteney, Simon James

(56) References cited:
- EP-A1- 1 995 804
- US-A1- 2005 214 597
- US-A1- 2006 073 384

## Description

### BACKGROUND

### 1. Field of the Invention

The present invention relates to a battery assembly, and more particularly, to a battery assembly suitable for various types of bare cells.

### 2. Discussion of Related Art

In recent times, advances in technology and increasing demands of mobile devices, have resulted in rapid rises in the demand for a secondary batteries as an energy source.

A secondary battery generally comprises either a hard pack or an inner pack. The inner pack is used by covering the battery with a cover forming a portion of an external device when the battery is mounted inside the external device, thereby making the mounting relatively troublesome. However, there are advantages to this approach in that the design is easy, the cost is inexpensive, and the compatibility is good.

In general, the inner pack is configured to include a chargeable and dischargeable bare cell and a protective circuit module that is electrically connected to the bare cell to control charge and discharge and break a circuit upon overcharging and overdischarging. The inner pack is configured to include a resin that is filled in a gap between the bare cell and the protective circuit module, and an external frame that is molded in a shape that is mountable in the external device in order to pack the bare cell, the protective circuit module, and the resin therein.

The protective circuit module is configured to include a substrate that is provided outside the bare cell and has a protective circuit electrically connected to an electrode terminal of the bare cell thereon and external and internal input and output terminals that are provided at an opposite side of the substrate for connection to the external device.

The protective circuit is manufactured in a variety of shapes according to the type of battery pack. Although each protective circuit module uses the same type of bare cell, it should be designed to meet the specifications arising from various conditions of customer reliability and outer design. Many types of protective circuit modules therefore need to be managed in an actual mass production as a consequence of these variables, and this causes problems in that much time is consumed and productivity is degraded.

EP 1 995 804 discloses a battery pack having a holder for a PCM which also functions as an end cap for sealing an upper opening portion of a can containing a bare cell.

### SUMMARY OF THE INVENTION

The present invention sets out to provide a battery assembly incorporating a standardised protective circuit module that can be commonly used for various types of bare cells.

According to the present invention, there is provided a battery assembly comprising:
a bare cell comprising an electrode assembly, a can that receives the electrode assembly and a cap assembly that seals an upper opening portion of the can and has an electrode terminal protruded therefrom;
a protective circuit module (PCM) comprising a protective circuit; characterised by
an adaptor structure mounted on the cap assembly and comprising connection means for forming an electrical connection between the bare cell and the PCM;
wherein the adaptor structure comprises a seat adapted to accommodate the PCM and the PCM is accommodated upon the seat.

Preferred aspects of the invention are set out in appended claims 2 to 16.

### BRIEF DESCRIPTION OF THE DRAWINGS

The accompanying drawings, together with the description, illustrate embodiments of the present invention, and serve to explain the principles of the present invention.

FIG. 1 is a perspective view illustrating a battery assembly according to a first embodiment of the present invention;

FIG. 2 is an exploded perspective view illustrating the battery assembly according to the first embodiment of the present invention;

FIG. 3 is a cross-sectional view taken along line A-A' of FIG. 1;

FIG. 4 is an exploded perspective view illustrating a battery assembly according to a second embodiment of the present invention;

FIG. 5 is a cross-sectional view taken along line B-B' of FIG. 4; and

FIG. 6 is a perspective view illustrating a battery assembly according to a third embodiment of the present invention.

### DETAILED DESCRIPTION OF THE INVENTION

In the following detailed description, only certain embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

Hereinafter, embodiments of a battery assembly according to the present invention will be described in detail with reference to the accompanying drawings.

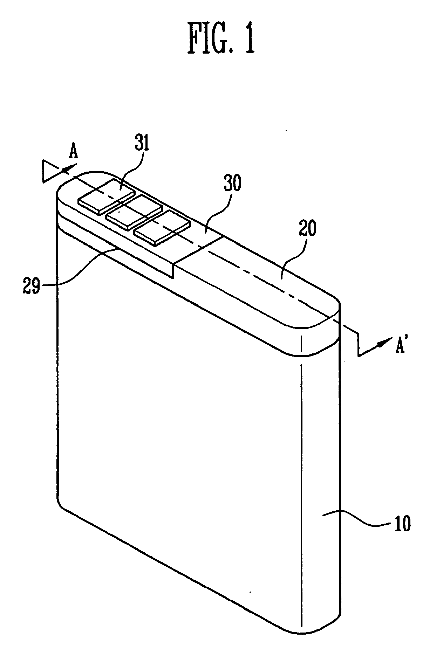

FIG. 1 is a perspective view illustrating a battery assembly according to a first embodiment of the present invention.

Referring to FIG. 1, a battery assembly according to a first assembly of the present invention is configured to include a bare cell 10, a protective circuit module 30, and a adaptor structure 20 that is positioned on the upper portion of the bare cell 10 and has a space 29 in which the protective circuit module 30 is seated.

Although not shown in FIG. 1, the bare cell 10 is configured to include an electrode assembly, a can that receives an electrode assembly, and a cap assembly that seals an upper opening portion of the can and has an electrode terminal protruded therefrom. The electrode terminal and the cap assembly have different polarity, such that they are insulated from each other.

The protective circuit module 30 has a standardized shape and includes an external input and output terminal unit 31 on one surface thereof that is exposed to the outside. Although not shown, a protective circuit for the bare cell 10 is formed on the other surface of the protective circuit module 30 that is seated in the adaptor structure 20. The space 29 in which the protective circuit module 30 formed in the adaptor structure 20 is seated has a constant shape at all times and the adaptor structure 20 plays a role of electrically connecting the bare cell 10 to the protective circuit module 30.

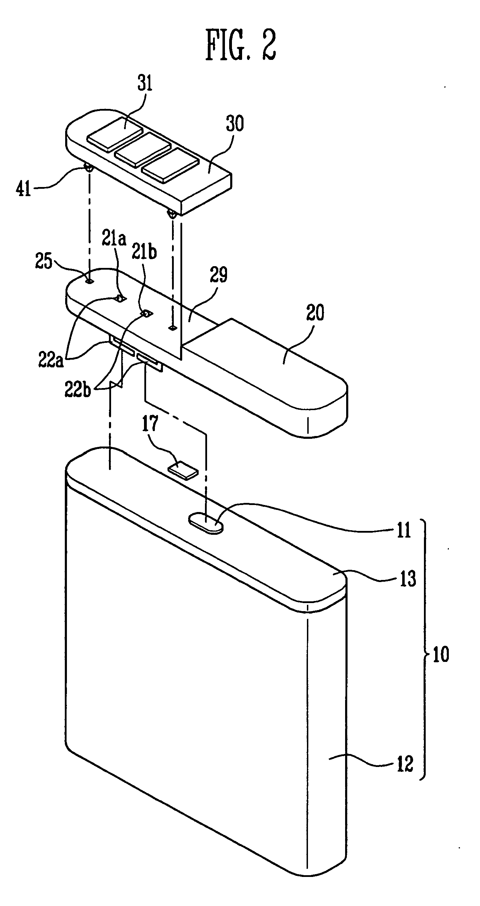

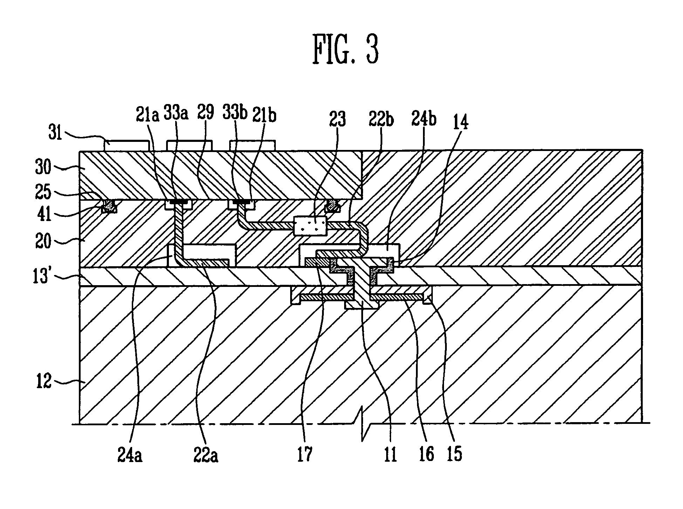

The electrical connection adaptor structure of the protective circuit 30 and the bare cell 10 according to the first embodiment of the present invention will be described below with reference to FIGS. 2 and 3.

According to the present invention, when the type or size of the battery is changed, only the type or size of the adaptor structure 20 that is positioned on the upper portion of the bare cell 10 is changed and the space 29 in which the protective circuit module 30 is seated has a constant shape at all times, the protective circuit module 30 being seated in the adaptor structure. Therefore, the standardized protective circuit module 30 is coupled to the adaptor structure 20, such that the protective circuit module 30 can be commonly used for various types of batteries. As a result, since there is no need to manufacture the complicated protective circuit module 30 according to various types of batteries, the productivity of the battery can be improved.

FIG. 2 is an exploded perspective view illustrating the battery assembly according to the first embodiment of the present invention.

Referring to FIG. 2, the bare cell 10 includes a can 12 that receives the electrode assembly (not shown) and a cap assembly 13 that seals the can 12. The cap assembly 13 is electrically connected to the anode of the electrode assembly. An electrode terminal 11 projects through the cap assembly 13 via an insulating gasket (not shown) is electrically connected to the cathode of the electrode assembly.

The inside of the adaptor structure 20 in which the protective circuit module 30 is seated is formed with a first lead 22a and a second lead 22b to electrically connect the bare cell 10 to the protective circuit module 30. One end of the first lead 22a is connected to the cap assembly 13 and one end of the second lead 22b adaptor structure is connected to the electrode terminal 11. In each case, the other end of the lead is electrically connected to the external input and output terminal unit 31 of the protective circuit module 30. Also, a first connecting hole 21 a and a second connecting hole 21 b are formed in the adaptor structure 20 so as to provide a rail for connecting the first lead 22a and the second lead 22b between the bare cell 10 and the protection circuit module 30. An insulating sheet 17 is located between the second lead 22b and the cap assembly 13. This is to prevent the occurrence of short due to the contact of the second lead 22b and the cap assembly 13.

The adaptor structure 20 is formed from a molding material that has a safety element 23 (see FIG. 3) molded therein. In an alternative embodiment the adaptor structure 20 is formed from a case that includes a space accommodating the safety element therein. Herein, the safety element is used to charge the battery at a stable level. The safety element is configured to include a field effect transistor (FET) as a switching element that controls abnormal current situations such as overcharging, etc., a voltage detector, and passive elements such as a resistor, a capacitor, etc.

The protective circuit module 30 and the adaptor structure 20 are mechanically coupled to each other by a separable member. As a result, the protective circuit module 30 and the adaptor structure 20 can be coupled and separated to and from each other. The separable member takes the form of a coupling protrusion 41 formed on the lower portion of the protective circuit module 30 and a coupling groove 25 formed on the upper portion of the adaptor structure 20 contacting the coupling projection 41.

FIG. 3 is a cross-sectional view taken along line A-A' of FIG. 1.

Referring to FIG. 3, the can 12 is made of aluminum or aluminum alloy having an approximately rectangular parallelepiped shape and receives the electrode assembly (not shown) through the opened upper end, thereby playing the role of a container for the electrode assembly and an electrolyte. In addition, the can 12 itself can play a role of a terminal.

The cap assembly 13 (see FIG. 1) is provided on the opened upper end of the can 12, thereby sealing the inside of the can 12. More specifically, sealing the opened upper end of the can 12 is a cap plate 13'. A tube-shaped insulating gasket 14 is installed between the cap plate 13' and the electrode terminal 11, which penetrates through the terminal hole formed at the central portion of the cap plate 13' to electrically insulate them. In addition, an insulating plate 15 is disposed on the lower surface of the cap plate 13' and a terminal plate 16 is disposed on the lower surface of the insulating plate 15. The bottom portion of the electrode terminal 11 is electrically connected to the terminal plate 16.

At this time, an anode tab drawn from an anode plate is welded to the lower surface of the cap plate 13' and a cathode tab drawn from a cathode plate is welded to the lower end of the electrode terminal 11. As described above, the cap plate 13' is electrically connected to the anode and the electrode terminal 11 is electrically connected to the cathode.

The adaptor structure 20 disposed on the upper portion of the bare cell 10 has the space in which the protective circuit module 30 is seated and is mechanically coupled to the coupling protrusion 41 of the protective circuit module 30 by the coupling groove 25 of the adaptor structure 20. It is electrically connected to the bare cell 10 by the first lead 22a and the second lead 22b that are formed inside the adaptor structure 20.

One side of the first lead 22a and the second lead 22b is exposed to the bare cell 10 side and the other side thereof is exposed to the protective circuit module 30 side. Thereby, the cap plate 13' and the first lead 22a and the electrode terminal 11 and the second lead 22b of the bare cell 10 are electrically connected to each other by bonding schemes such as soldering, spot, laser, etc. In this embodiment, the lower surface of the adaptor structure 20 is formed with a first groove 24a and a second groove 24b in order to provide a space in which the bare cell 10 and the leads 22a and 22b are connected. In addition, one region of the second lead 22b is connected to the safety element 23 as described above.

The protective circuit module 30 is configured to include a protective circuit substrate 32, wherein one side of the protective circuit substrate 32 is formed to be expose to the outside of the external input and output terminal unit 31 and the other side thereof facing the adaptor structure 20 is formed with the protective circuit (not shown). The protective circuit and the external input and output terminal unit 31 are electrically connected to each other by the conductive adaptor structure that penetrates through the protective circuit substrate 32. Furthermore, a first connecting terminal 33a and a second connecting terminal 33b are configured to provide on an other side of the protective circuit module 30. the first connecting terminal 33a and the second connecting terminal 33b are electrically connected to the first lead 22a and the second lead 22b respectively. A first connecting hole 21a having a positive polarity and a second connecting hole 21b having a negative polarity are formed on the top surface of the adaptor structure 20 exposing the first lead 22a, and the second lead 22b so as to provide a space to connect the protective circuit module 30 to the first lead 22a and the second lead 22b. Therefore, the protective circuit module 30 and the adaptor structure 20 are engaged firmly each other.

The first lead 22a and the second lead 22b are generally made of a nickel material and easily connect the bare cell 10 to the protective circuit module 30. In other words, one side of the first lead 22a is connected to the anode of the protective circuit module 30 and the other thereof is connected to the cap plate 13'. In addition, one side of the first lead 22a is connected to the cathode of the protective circuit module 30 and the other thereof is connected to the electrode terminal 11. The first lead 22a and the second lead 22b are generally configured with an L- shaped adaptor structure or a flat adaptor structure.

The safety element 23 that is connected to one region of the second lead 22b is installed to safely protect the battery from overcurrent, overcharging, and overdischarging. A fuse, a bimetal, a positive temperature coefficient (PTC) element, etc. may be installed. The safety element 23 according to the first embodiment of the present invention is configured with positive temperature coefficient that breaks the flow of current when it exceeds the range of a predetermined temperature and rapidly resumes the flow of current when it enters the corresponding temperature range.

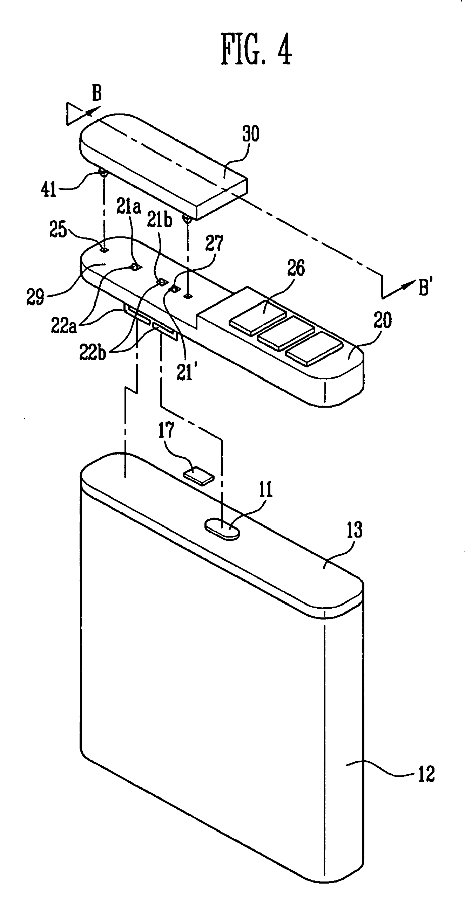

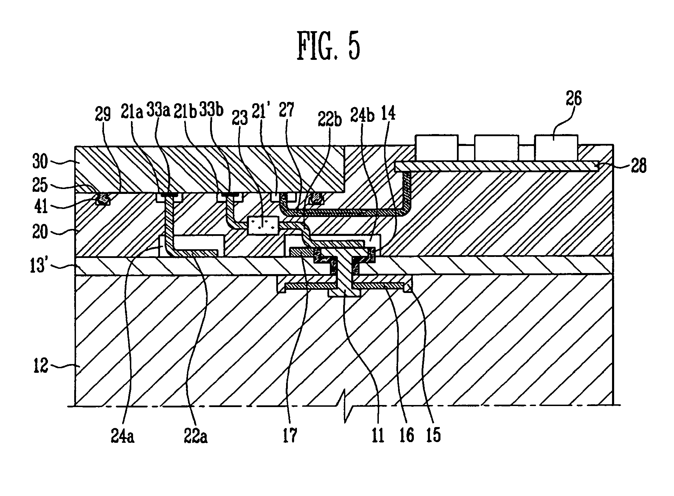

FIG. 4 is an exploded perspective view showing a battery assembly according to a second embodiment of the present invention and FIG. 5 is a cross-sectional view taken along line B-B' of FIG. 4. In FIGS. 4 and 5, the description of the same components as the first embodiment of the present invention described in FIGS. 1 to 3 will be omitted.

Referring to FIG. 4, the battery assembly according to the second embodiment of the present invention includes the bare cell 10, the protective circuit module 30 that is formed with the protective circuit for the bare cell 10 and has the standardized shape, and the adaptor structure 20 that is formed with the space in which the protective circuit module 30 is seated and is positioned on the upper portion of the bare cell 10 to electrically connect the protective circuit module 30 to the bare cell 10. At this time, the external input/output terminal unit 26, which is connected to the external device, is formed at the outside of the adaptor structure 20. A third connecting hole 21' is formed on the upper surface of the adaptor structure 20 on which a protective circuit module 30 is seated. And one side of a connecting member 27, which is molded inside of the adaptor structure 20, is exposed and connects the protective circuit module 30 to auxiliary substrate 28, which is located within the adaptor structure 20 and is shown in Fig 5.

Referring to FIG. 5, the adaptor structure 20 is formed with the space 29 in which the protective circuit substrate 32 mounted with the protective circuit (not shown) is seated and one side of the auxiliary substrate 28 positioned in the inside thereof is formed with the external input and output terminal unit 26 to be exposed to the outside and the other thereof is connected to the first lead 22a and the second lead 22b. The protective circuit and the external input and output terminal unit 26 are electrically connected to each other by a conductive adaptor structure penetrating through the protective circuit substrate 32.

One side of the auxiliary substrate 28 positioned in the inside of the adaptor structure 20 is formed with the external input and output terminal unit 26 exposed to the outside and the other thereof is connected to the first lead 22a and the second lead 22b. The protective circuit and the external input and output terminal unit 26 are electrically connected to each other by a conductive adaptor structure penetrating through the protective circuit substrate 32.

Each of the first lead 22a and the second lead 22b are electrically connected to the cap plate 13' and the electrode terminal 11 and one region of the second lead 22b is formed with the safety element 23. The adaptor structure 20 is formed from a molding material that molds the safety element 23 and the first lead 22a and the second lead 22b therein. Alternative embodiments provide a case that includes a space therein.

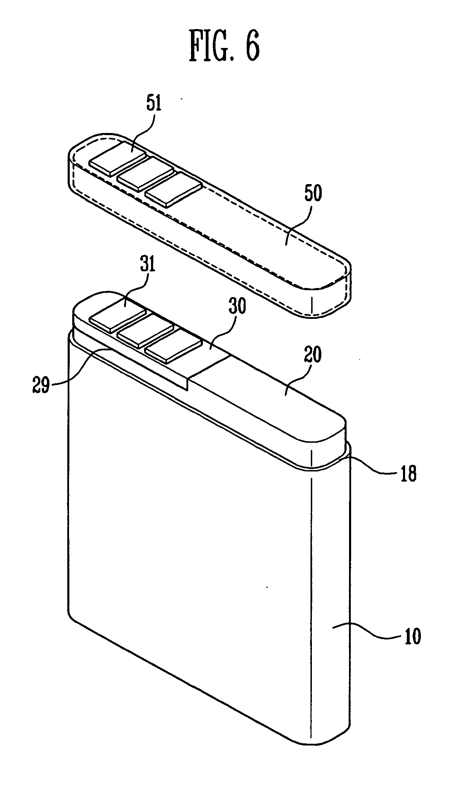

FIG. 6 is a perspective view showing a battery assembly according to a third embodiment of the present invention.

Referring to FIG. 6, the adaptor structure 20 in which the protective circuit module 30 is seated is formed to be smaller than the circumference of the upper end portion of the bare cell 10, wherein the circumference of the upper end portion of the bare cell 10 is formed with a connection part 18. The connection part 18 may be connected to an upper case 50 that covers the protective circuit module 30 and the adaptor structure 20. In the upper case 50, a region contacting the external input and output terminal unit 31 of the protective circuit module 30 is formed with a pad unit 51 and the protective circuit module 30 and the upper case 50 may be electrically connected by welding the pad unit 51 and the external input and output terminal unit 31.

Herein, the external input and output terminal are formed on the protection circuit module 30. In this case, it is natural that the pad unit should be also formed on the same side.

Although the embodiment of the present invention describes that the battery has the electrode terminal that is the cathode and the cap assembly that is the anode, the polarity thereof can be changed.

While the present invention has been described in connection with certain embodiments, it is to be understood that the invention is not limited to the disclosed embodiments, but, on the contrary, is intended to cover various modifications and equivalent arrangements included within the scope of the appended claims, and equivalents thereof.

## Claims

1. A battery assembly comprising
a bare cell (10) comprising an electrode assembly, a can (12) that receives the electrode assembly and a cap assembly (12) that seals an upper opening portion of the can and has an electrode terminal (11) protruded therefrom;
a protective circuit module (PCM) (30) comprising a protective circuit;
**characterised by**
an adaptor structure (20) mounted on the cap assembly (12) and comprising connection means for forming an electrical connection between the bare cell (10) and the PCM;
wherein the adaptor structure (20) comprises a seat adapted to accommodate the PCM and the PCM is accommodated upon the seat.

2. A battery assembly according to Claim 1, wherein the seat has a size and shape that conform to the size and shape of the PCM.

3. A battery assembly according to Claim 1 or 2, wherein the connection means comprises a first lead (22a) and a second lead (22b), one said lead forming a positive connection with the bare cell and another said lead forming a negative connection with the bare cell.

4. A battery assembly according to claim 3, wherein the first lead (22a) forms a connection with the cap assembly (13) and the second lead (22b) forms a connection with the electrode terminal (11).

5. A battery assembly according to Claim 3 or 4, wherein at least one said lead is exposed at a surface of the seat for forming a connection with the PCM.

6. A battery assembly according to Claim 5, wherein the PCM is provided with a connecting terminal on a surface thereof that addresses the surface of the seat at which the said lead is exposed, the said connecting terminal being connected to the exposed part of the lead.

7. A battery assembly according to Claim 6, wherein the said adaptor structure (20) comprises a recess for accommodating the said connecting terminal.

8. A battery assembly according to one of Claims 3 to 7, wherein one of the said leads comprises a safety element (23) for interrupting current flow.

9. A battery assembly according to any preceding claim, wherein the said adaptor structure (20) comprises a recess accommodating the said terminal (11).

10. A battery assembly according to any preceding claim, comprising fixing means for securing the PCM upon the said seat.

11. A battery assembly according to any preceding claim, wherein the said adaptor structure (20) is moulded around the components it houses.

12. A battery assembly according to any preceding claim, wherein the PCM is provided with an external input/output terminal formation.

13. A battery assembly according to one of Claims 1 to 11, wherein the adaptor structure is provided with an external input/output terminal formation.

14. A battery assembly according to Claim 13, wherein input/output terminals of the input/output terminal formation are mounted upon an auxiliary substrate contained within the adaptor structure.

15. A battery assembly according to Claim 14, wherein the auxiliary substrate is connected to the PCM via a connecting member located within the adaptor structure.

16. A battery assembly according to any preceding claim, wherein the adaptor structure (20) defines an outer case portion of the battery assembly.

## Patentansprüche

1. Batterieanordnung, die aufweist:
eine blanke Zelle (10), die eine Elektrodenanordnung, eine Hülle (12), die die Elektrodenanordnung aufnimmt, und eine Kappenanordnung (13) aufweist, die einen oberen Öffnungsabschnitt der Hülle abdichtet und eine Elektrodenanschlussklemme (11) aufweist, die daraus hervorsteht;
ein Schutzschaltungsmodul (PCM) (30), der eine Schutzschaltung aufweist;
**gekennzeichnet durch**
eine Adapterstruktur (20), die an der Kappenanordnung (13) montiert ist und ein Verbindungsmittel für das Bewirken einer elektrischen Verbindung zwischen der blanken Zelle (10) und dem Schutzschaltungsmodul aufweist,
wobei die Adapterstruktur (20) einen Sitz aufweist, der ausgebildet ist, um das Schutzschaltungsmodul aufzunehmen, und das Schutzschaltungsmodul auf dem Sitz aufgenommen wird.

2. Batterieanordnung nach Anspruch 1, bei der der Sitz eine Größe und eine Form aufweist, die der Größe und der Form des Schutzschaltungsanoduls entsprechen.

3. Batterieanordnung nach Anspruch 1 oder 2, bei der das Verbindungsmittel eine erste Leitung (22a) und eine zweite Leitung (22b) aufweist, wobei eine Leitung eine positive Verbindung mit der blanken Zelle bildet und eine weitere Leitung eine negative Verbindung mit der blanken Zelle bildet.

4. Batterieanordnung nach Anspruch 3, bei der die erste Leitung (22a) eine Verbindung mit der Kappenanordnung (13) und die zweite Leitung (22b) eine Verbindung mit der Elektrodenanschlussklemme (11) bildet.

5. Batterieanordnung nach Anspruch 3 oder 4, bei der mindestens eine Leitung an einer Oberfläche des Sitzes für die Herstellung einer Verbindung mit dem Schutzschaltungsmodul freigelegt ist.

6. Batterieanordnung nach Anspruch 5, bei der das Schutzschaltungsmodul mit einer Verbindungsanschlussklemme auf einer Fläche davon versehen ist, die auf die Oberfläche des Sitzes zielt, auf der die Leitung freigelegt ist, wobei die Verbindungsanschlussklemme mit dem freigelegten Teil der Leitung verbunden wird.

7. Batterieanordnung nach Anspruch 6, bei der die Adapterstruktur (20) eine Aussparung für das Aufnehmen der Verbindungsanschlussklemme aufweist.

8. Batterieanordnung nach einem der Ansprüche 3 bis 7, bei der eine der Leitungen ein Sicherheitselement (23) für das Unterbrechen des Stromflusses aufweist.

9. Batterieanordnung nach einem der vorhergehenden Ansprüche, bei der die Adapterstruktur (20) eine Aussparung aufweist, die die Anschlussklemme (11) aufnimmt.

10. Batterieanordnung nach einem der vorhergehenden Ansprüche, die ein Befestigungsmittel für das Sichern des Schutzschaltungsmoduls auf dem Sitz aufweist.

11. Batterieanordnung nach einem der vorhergehenden Ansprüche, bei der die Adapterstruktur (20) um die Bauteile herum geformt ist, die sie aufnimmt.

12. Batterieanordnung nach einem der vorhergehenden Ansprüche, bei der das Schutzschaltungsmodul mit einer externen Eingangs/Ausgangsklemmenausbildung versehen ist.

13. Batterieanordnung nach einem der Ansprüche 1 bis 11, bei der die Adapterstruktur mit einer externen Eingangs/Ausgangsklemmenausbildung versehen ist.

14. Batterieanordnung nach Anspruch 13, bei der die Eingangs/Ausgangsklemmen der Eingangs/Ausgangsklemmenausbildung auf einem Hilfssubstrat montiert sind, das innerhalb der Adapterstruktur enthalten ist.

15. Batterieanordnung nach Anspruch 14, bei der das Hilfssubstrat mit dem Schutzschaltungsmodul mittels eines Verbindungselementes verbunden ist, das sich innerhalb der Adapterstruktur befindet.

16. Batterieanordnung nach einem der vorhergehenden Ansprüche, bei der die Adapterstruktur (20) einen Außengehäuseabschnitt der Batterieanordnung definiert.

## Revendications

1. Assemblage de batterie, comprenant :
une cellule nue (10), comprenant un assemblage d'électrode, un bac (12) recevant l'assemblage d'électrode et un assemblage de capuchon (13), établissant l'étanchéité d'une partie d'ouverture supérieure du bac et comportant une borne d'électrode (11) qui en déborde ;
un module de circuit de protection (PCM) (30), comprenant un circuit de protection ; **caractérisé par** :
une structure d'adaptateur (20), montée sur l'assemblage de capuchon (13) et comprenant un moyen de connexion pour établir une connexion électrique entre la cellule nue (10) et le PCM ;
dans lequel la structure d'adaptateur (20) comprend un siège adapté pour recevoir le PCM, le PCM étant reçu sur le siège.

2. Assemblage de batterie selon la revendication 1, dans lequel le siège a une taille et une forme adaptées à la taille et à la forme du PCM.

3. Assemblage de batterie selon les revendications 1 ou 2, dans lequel le moyen de connexion comprend un premier conducteur (22a) et un deuxième conducteur (22b), un dit conducteur établissant une connexion positive avec la cellule nue et un autre dit conducteur établissant une connexion négative avec la cellule nue.

4. Assemblage de batterie selon la revendication 3, dans lequel le premier conducteur (22a) établit une connexion avec l'assemblage de capuchon (13), le deuxième conducteur (22b) établissant une connexion avec la borne d'électrode (11).

5. Assemblage de batterie selon les revendications 3 ou 4, dans lequel au moins un dit conducteur est exposé au niveau d'une surface du siège pour établir une connexion avec le PCM.

6. Assemblage de batterie selon la revendication 5, dans lequel le PCM comporte une borne de connexion sur une de ses surfaces, dirigée vers la surface du siège au niveau de laquelle ledit conducteur est exposé, la dite borne de connexion étant connectée à la partie exposée du conducteur.

7. Assemblage de batterie selon la revendication 6, dans lequel ladite structure d'adaptateur (20) comprend un évidement pour recevoir ladite borne de connexion.

8. Assemblage de batterie selon l'une des revendications 3 à 7, dans lequel un desdits conducteurs comprend un élément de sécurité (23) pour interrompre l'écoulement du courant.

9. Assemblage de batterie selon l'une quelconque des revendications précédentes, dans lequel ladite structure d'adaptateur (20) comprend un évidement recevant ladite borne (11).

10. Assemblage de batterie selon l'une quelconque des revendications précédentes, comprenant un moyen de fixation pour fixer le PCM sur ledit siège.

11. Assemblage de batterie selon l'une quelconque des revendications précédentes, dans lequel ladite structure d'adaptateur (20) est moulée autour des composants qu'elle reçoit.

12. Assemblage de batterie selon l'une quelconque des revendications précédentes, dans lequel le PCM comporte une structure de borne externe d'entrée/de sortie.

13. Assemblage de batterie selon l'une des revendications 1 à 11, dans lequel la structure d'adaptateur comporte une structure de borne externe d'entrée/de sortie.

14. Assemblage de batterie selon la revendication 13, dans lequel les bornes d'entrée/de sortie de la structure de borne d'entrée/de sortie sont montées sur un substrat auxiliaire contenu dans la structure d'adaptateur,

15. Assemblage de batterie selon la revendication 14, dans lequel le substrat auxiliaire est connecté au PCM par l'intermédiaire d'un élément de connexion agencé dans la structure d'adaptateur.

16. Assemblage de batterie selon l'une quelconque des revendications précédentes, dans lequel la structure d'adaptateur (20) définit une partie de boîtier externe de l'assemblage de batterie.
